# EUROPÄISCHE PATENTSCHRIFT

(11) **EP 2 313 349 B1**
(45) Veröffentlichungstag und Bekanntmachung des Hinweises auf die Patenterteilung: **04.09.2013**
(21) Anmeldenummer: 09786117.3
(22) Anmeldetag: 10.08.2009
(51) Int. Cl.: C04B 7/44, C10J 3/12, F27D 17/00, F23G 5/027

(54) **VERFAHREN ZUM AUFBEREITEN VON ALTERNATIVEN, KOHLENSTOFFHALTIGEN, NIEDERKALORISCHEN ABFALLSTOFFEN FÜR DEN EINSATZ IN FEUERUNGSANLAGEN**
METHOD FOR PREPARING ALTERNATIVE, LOW-CALORIC HYDROCARBON WASTE MATERIALS FOR USE IN FURNACE SYSTEMS
PROCÉDÉ DE TRAITEMENT DE DÉCHETS ALTERNATIFS, CARBONÉS, FAIBLEMENT CALORIQUES, POUR UTILISATION DANS DES INSTALLATIONS DE CHAUFFE

(30) Priorität: 14.08.2008 AT 12742008
(43) Veröffentlichungstag der Anmeldung: 27.04.2011
(73) Patentinhaber: Holcim Technology Ltd., 8645 Rapperswil-Jona (CH)
(72) Erfinder: ERNST, Frank, CH-8037 Zürich (CH); OBRIST, Albert, CH-5103 Möriken (CH)
(74) Vertreter: Keschmann, Marc
(86) Internationale Anmeldenummer: PCT/IB2009/006490
(87) Internationale Veröffentlichungsnummer: WO 2010/018436

(56) Entgegenhaltungen:
- WO-A-02/090283
- DE-A1- 3 220 229
- DE-A1- 3 320 670
- JP-A- 1 121 617

## Beschreibung

Die Erfindung bezieht sich auf ein Verfahren zum Aufbereiten von alternativen, kohlenstoffhaltigen, niederkalorischen Abfallstoffen für den Einsatz in Feuerungsanlagen, insbesondere Drehrohröfen für die Klinkerherstellung, wobei die kohlenstoffhaltigen alternativen Brennstoffe einer Hochtemperaturvergasung unter anoxischen Bedingungen bei Temperaturen von über 1000° C unterworfen werden und wobei Wasser, Wasserdampf oder CO₂ eingedüst wird, um eine Umsetzung zu CO und H₂ zu gewährleisten.

Verfahren zur Aufbereitung von industriellen Abfällen zur Erzeugung von Synthesegas wurden in unterschiedlicher Ausbildung bereits vorgeschlagen. Die WO 02/090283 A1 betrifft die Herstellung von Zementklinker aus Zementrohmaterial, wobei aus stückigen Abfallbrennstoffen Brenngas in einem Vergasungsreaktor erzeugt wird, wobei der Vergasungsreaktor über eine Gaszuführleitung angeschlossen ist, über die beispielsweise heiße Kühlerabluft zur Pyrolyse in den Vergasungsreaktor eingeführt wird. Die deutsche Offenlegungsschrift DE 32 20 229 A1 wiederum betrifft ein Verfahren zur Vergasung von Kohle in einer Fließbettvergasungszone, wobei die Vergasungszone über in die Zone eingebrachtes Klinkermateriel erhitzt wird. Die DE 33 20 670 A1 zeigt und beschreibt ein Verfahren sowie eine Vorrichtung zur Herstellung von Bindemitteln, bei welchen eine Pyrolysevorrichtung für alternative Brennstoffe ausschließlich mit heißen Abgasen des Brennofens beheizt wird. In der JP 01 121617 A wiederum ist ein Verfahren beschrieben, bei dem alternative Brennstoffe direkt durch heiße Abluft eines Klinkerkühlers pyrolysiert werden.

Hochtemperaturvergasungsverfahren, bei welchen eine autotherme Erhitzung unter kontrollierten Bedingungen vorgenommen wird, zeichnen sich dadurch aus, dass hohe Anforderungen an den Heizwert der alternativen Brennstoffe gestellt werden, um eine Verbrennung zu weitestgehend inerten Gasen zu vermeiden. Das erfindungsgemäße Verfahren ist im Wesentlichen dadurch gekennzeichnet, dass für die Hochtemperaturvergasung die Abwärme eines Klinkerkühlers verwendet wird. Unter anoxischen Bedingungen werden hier Bedingungen verstanden, bei welchen freier Sauerstoff nicht zugefügt wird. Anoxische Bedingungen zeichnen sich somit dadurch aus, dass heiße Luft oder Sauerstoff nicht in den Reaktor gelangt, in welchem die Vergasung vorgenommen wird. Demgegenüber können naturgemäß aber Sauerstoffverbindungen, wie beispielsweise wasserdampf oder CO₂ durchaus in einem derartigen allothermen Vergasungsverfahren umgesetzt werden, wobei im Falle von CO₂ in Anwesenheit von Kohlenstoff bei den erfindungsgemäß angestrebten hohen Temperaturen das Gleichgewicht quantitativ auf der Seite von Kohlenmonoxid und bei Eindüsen von Wasser auf der Seite von Synthesegas, nämlich Kohlenmonoxid und Wasserstoff, liegt. Das erfindungsgemäße Verfahren eignet sich in besonderem Maße für die Aufbereitung von alternativen kohlenstoffhaltigen Brennstoffen für den Einsatz bei der Klinkerherstellung, da hier das erfindungsgemäß angestrebte hohe Temperaturniveau durch den importierten heißen Klinker zur Verfügung gestellt werden kann. Die im Klinkerkühler eingesetzte Kühlluft gelangt, z.B. in Form von Tertiärluft, mit überaus hoher Temperatur, und zwar insbesondere mit Temperaturen zwischen 1000 und 1300° C in entsprechende Wärmetauscher, bei welchen unter Vermeidung eines unmittelbaren Austauschs der Gase die entsprechende Erhitzung unter anoxischen Bedingungen erzielt werden kann. Mit Vorteil wird das Verfahren hierbei so durchgeführt, dass die heiße Abluft eines Klinkerkühlers eingesetzt wird, wobei die Erhitzung über Wärmetauscher erfolgt. Neben Ausbildungen von Wärmtauschern, beispielsweise in Form von doppelwandigen Drehrohren, kann dieses Erhitzen bevorzugt so erfolgen, dass die heiße Abluft zum Erhitzen von temperaturfesten Wärmespeichern wie z.B. Sand oder Keramikteilen eingesetzt wird und dass die aufzubereitenden kohlenstoffhaltigen alternativen Brennstoffe mit den erhitzten Wärmespeichern vermischt werden.

In besonders einfacher Weise kann hierbei so vorgegangen werden, dass als temperaturfeste Wärmespeicher eine Teilmenge des in den Klinkerkühler gelangenden Klinkers eingesetzt wird. Auf diese Weise wird eine unmittelbare Umsetzung mit dem Sauerstoff der Luft vermieden und unmittelbar ohne Erhitzung des Stickstoffballastes, welcher mit der Kühlluft einhergeht, ein entsprechend heißes Gas mit hohem Brennwert erzielt, welches in der Folge auch zum Vorkalzinieren der Chargen eingesetzt werden kann. In modernen Zementherstellungsverfahren werden zumeist 60 % der thermischen Energie im Vorkalzinierer und etwa 40 % für die Hauptfeuerung im Drehrohrofen eingesetzt. Aufgrund des hochwertigen Synthesegases kann der Anteil, der auf diese Weise im Drehrohrofen zum Einsatz gelangt, wesentlich erhöht werden und insbesondere gegenüber dem unmittelbaren Einsatz von alternativen Brennstoffen im Drehrohrofen wesentlich erhöht werden. Der Einsatz des Synthesegases ist vor allem in der Hauptfeuerung interessant, da alternative Brennstoffe dort nur unter hohem Vorbehandlungsaufwand oder in kleinen Mengen eingesetzt werden können. Im Präkalzinator hingegen können auch gröberstückige alternative Brennstoffe aufgegeben werden.

Der Vorteil der vorliegenden Erfindung ist also in der thermischen Vorbehandlung von Abfällen zu sehen und damit in der Erzeugung eines Gases, das eine gleichmäßige Befeuerung der Hauptfeuerung erlaubt, ohne die Brenner aufwändig zu modifizieren. Auch kann durch die erfindungsgemäße Hochtemperaturvergasung die bisher erforderliche mechanische Aufbereitung der alternativen Brennstoffe wesentlich vereinfacht und reduziert werden, wobei sich das Verfahren auch für nicht gleichförmige alternative Brennstoffe besonders eignet. Wesentlich ist hierbei die Integration in den Klinkerherstellungsprozess, da die Tertiärluft hier die entsprechend hohen Temperaturen für das hochwertige Synthesegas bereitstellt. Wenn, wie erfindungsgemäß bevorzugt vorgegangen wird, eine Teilmenge des in den Klinkerkühler gelangenden Klinkers unmittelbar als temperaturfester Wärmespeicher für die allotherme Erhitzung eingesetzt wird, gelangt die sich bildende Asche bzw. die aus den alternativen Brennstoffen verbleibenden Feststoffe in relativ guter mechanischer Dispersion in den Klinker und kann in der Folge unmittelbar als mineralische Komponente in der zementmühle eingesetzt werden. Der im Rahmen des erfindungsgemäßen Verfahrens für die Herstellung des Synthesegases umgesetzte Sauerstoff wird ausschließlich aus Sauerstoffverbindungen wie H₂O oder CO₂ bezogen, sodass das gewünschte thermodynamische Gleichgewicht bei Temperaturen über 1000°, und insbesondere bei Temperaturen über 1100° C, sicher eingehalten werden kann. Pyrolyseverfahren, die gleichfalls mit unterstöchiometrischen bzw. anaeroben Bedingungen durchgeführt werden, werden üblicherweise bei wesentlich tieferen Temperaturen durchgeführt und führen keinesfalls zu den hochwertigen Synthesegasen, wie sie im Rahmen der erfindungsgemäßen Verfahrensweise erzielt werden. Vor allen Dingen lässt sich die erzielte Qualität des Gases bei entsprechend tieferen Temperaturen nicht so weit an die Erfordernisse anpassen, dass eine gleichförmige Qualität erzielt werden kann. Durch die erfindungsgemäße Verfahrensweise wird das hohe Temperaturniveau der Tertiärluft bzw. des hergestellten Klinkers in einem weit höheren Ausmaß genutzt, als dies bei anderen Verfahren zur Nutzung der Abwärme der Fall wäre. Bei einer Nutzung der Abwärme zur Dampferzeugung bzw. zur nachfolgenden Energieerzeugung über Dampfturbinen erfolgt die Umsetzung bei wesentlich tieferen Temperaturen, sodass das Potential der hohen Temperaturen der Tertiärluft bzw. des erzeugten Klinkers nicht vollständig genutzt wird.

Neben dem Synthesegas ist auch die Asche ein Produkt, das in der Zementherstellung eingesetzt wird, nämlich durch Zumahlung als hydraulisch aktive Komponente zum Klinker in der Zementmühle. Vorteile der indirekten Vergasung ist hier die Abtrennung der Asche und die gezielte und kontrollierte Zumahlung, während im Fall, dass Klinker als wärmeübertragendes Medium genutzt wird, die Asche, wie bereits im Dokument erwähnt, direkt im Klinker dispergiert wird.

Um die für die Vergasung erforderlichen hohen Temperaturen sicherzustellen, kann es im vorliegenden Fall sinnvoll sein, eine Teilmenge des produzierten Synthesegases zur Erhitzung des Vergasungsreaktors heranzuziehen und zu verbrennen. Bei Verwendung des Klinkers als Wärmetauscher gelangt die bei der Vergasung entstehende Asche unmittelbar als mineralische Komponente in das Produkt und kann auf diese Weise gleichfalls optimal genutzt werden. Die Nutzung der Asche als mineralische Komponente in Zement kann aber auch dann sinnvoll sein, wenn die Vergasung in einem gesonderten Vergasungsreaktor vorgenommen wird, aus welchem dann die Asche und das Synthesegas gesondert ausgetragen werden.

## Patentansprüche

1. Verfahren zum Aufbereiten von kohlenstoffhaltigen alternativen Brennstoffen für den Einsatz in Feuerungsanlagen, insbesondere Drehrohröfen für die Klinkerherstellung, wobei die kohlenstoffhaltigen alternativen Brennstoffe einer Hochtemperaturvergasung unter anoxischen Bedingungen bei Temperaturen von über 1000° C unterworfen werden und wobei Wasser, wasserdampf oder CO₂ eingedüst wird, um eine Umsetzung zu CO und H₂ zu gewährleisten, wobei für die Hochtemperaturvergasung die Abwärme eines Klinkerkühlers verwendet wird, **dadurch gekennzeichnet, dass** die heiße Abluft eines Klinkerkühlers eingesetzt wird, wobei die Erhitzung über wärmetauscher erfolgt.

2. Verfahren nach Anspruch 1, **dadurch gekennzeichnet, dass** die heiße Abluft zum Erhitzen von temperaturfesten Wärmespeichern wie z.B. Sand oder Keramikteilen eingesetzt wird und dass die aufzubereitenden kohlenstoffhaltigen alternativen Brennstoffe mit den erhitzten Wärmespeichern vermischt werden.

3. Verfahren nach Anspruch 1 oder 2, **dadurch gekennzeichnet, dass** als temperaturfeste wärmespeicher eine Teilmenge des in den Klinkerkühler gelangenden Klinkers eingesetzt wird.

4. Verfahren nach einem der Ansprüche 1, 2 oder 3, **dadurch gekennzeichnet, dass** die Erhitzung der alternativen Brennstoffe in einem Drehrohrofen vorgenommen wird.

5. Verfahren nach einem der Ansprüche 1 bis 4, **dadurch gekennzeichnet, dass** eine Teilmenge des hergestellten Synthesegases zur Erzielung der Vergasungstemperatur verbrannt wird.

6. Verfahren nach einem der Ansprüche 1 bis 5, **dadurch gekennzeichnet, dass** die Asche aus dem Vergasungsverfahren als mineralische Komponente dem Zement zugemischt wird.

## Claims

1. A method for treating alternative, carbon-containing, low-caloric waste materials for use in furnace systems, in particu-lar rotary tubular kilns for the production of clinker, wherein the carbon-containing alternative fuels are subjected to high-temperature gasification under anoxic conditions at tempera-tures above 1000°C, and wherein water, water vapor or CO₂ is injected to ensure a reaction forming CO and H₂, wherein the waste heat from a clinker cooler is used for the high-temperature gasification, **characterized in that** the hot exhaust air from a clinker cooler is used, with heating being effected through heat exchangers.

2. A method according to claim 1, **characterized in that** the hot exhaust air is used for heating temperature-proof heat-storage means such as sand or ceramics, and that the carbon-containing, alternative fuels to be treated are mixed with the heated heat storage means.

3. A method according to claim 1 or 2, **characterized in that** a portion of the clinker entering the clinker cooler is used as said temperature-proof heat storage means.

4. A method according to any one of claims 1, 2 or 3, **characterized in that** heating of the alternative fuels is performed in a rotary tubular kiln.

5. A method according to any one of claims 1 to 4, **characterized in that** a portion of the generated synthesis gas is burned for attaining the gasification temperature.

6. A method according to any one of claims 1 to 5, **characterized in that** the ash from the gasification method is mixed to the cement as a mineral component.

## Revendications

1. Procédé pour préparer des combustibles carbonés de remplacement tubulaires destinés à être utilisés dans des installations de fours, en particulier dans des fours rotatifs pour la fabrication du clinker, dans lequel les combustibles carbonés de remplacement sont soumis à une gazéification à haute température dans des conditions anoxiques à des températures supérieures à 1000 °C, dans lequel de l'eau, de la vapeur d'eau ou du CO₂ est injecté(e) pour assurer une conversion en CO et H₂, et dans lequel la chaleur perdue d'un refroidisseur de clinker est utilisée pour la gazéification à haute température, **caractérisé en ce que** l'air chaud de sortie du refroidisseur de clinker est utilisé, le chauffage s'effectuant par l'intermédiaire d'échangeurs de chaleur.

2. Procédé selon la revendication 1, **caractérisé en ce que** l'air chaud de sortie est utilisé pour chauffer des accumulateurs de chaleur résistant à la température comme, par exemple, du sable ou des pièces céramiques, et **en ce que** les combustibles carbonés de remplacement à préparer sont mélangés avec les accumulateurs de chaleur chauffés.

3. Procédé selon la revendication 1 ou 2, **caractérisé en ce qu'**on utilise, comme accumulateurs de chaleur résistant à la température, une partie du clinker qui entre dans le refroidisseur de clinker.

4. Procédé selon l'une des revendications 1, 2 ou 3, **caractérisé en ce que** le chauffage des combustibles de remplacement s'effectue dans un four tubulaire rotatif.

5. Procédé selon l'une des revendications 1 à 4, **caractérisé en ce qu'**une partie du gaz de synthèse produit est brûlée pour obtenir la température de gazéification.

6. Procédé selon l'une des revendications 1 à 5, **caractérisé en ce que** la cendre issue du processus de gazéification est mélangée au ciment en qualité de constituant minéral.
